(19) Europäisches Patentamt
European Patent Office
Office européen des brevets

(11) EP 2 240 734 B1

(12) EUROPEAN PATENT SPECIFICATION

(45) Date of publication and mention
of the grant of the patent:
**31.08.2011 Bulletin 2011/35**

(51) Int Cl.:
$F27B\ 7/20^{(2006.01)}$        $F27B\ 7/42^{(2006.01)}$
$F27D\ 17/00^{(2006.01)}$       $C04B\ 7/60^{(2006.01)}$
$C04B\ 7/44^{(2006.01)}$        $C04B\ 7/43^{(2006.01)}$

(21) Application number: **08869834.5**

(22) Date of filing: **18.11.2008**

(86) International application number:
**PCT/EP2008/065744**

(87) International publication number:
**WO 2009/086981 (16.07.2009 Gazette 2009/29)**

(54) **APPARATUS AND METHOD FOR COOLING KILN EXHAUST GASES IN A KILN BYPASS**

VORRICHTUNG UND VERFAHREN ZUR KÜHLUNG VON ABGASEN EINES BRENNOFENS IN EINER OFENNEBENLEITUNG

APPAREIL ET PROCÉDÉ DE REFROIDISSEMENT DE GAZ D'ÉCHAPPEMENT DE FOUR DANS UNE DÉRIVATION DE FOUR

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.01.2008 DK 200800016**

(43) Date of publication of application:
**20.10.2010 Bulletin 2010/42**

(73) Proprietor: **FLSmidth A/S**
**2500 Valby (DK)**

(72) Inventor: **HUNDEBÖL, Sören**
**DK-9550 Mariager (DK)**

(74) Representative: **Johansson, Lars E.**
**Hynell Patenttjänst AB**
**Patron Carls väg 2**
**683 40 Hagfors/Uddeholm (SE)**

(56) References cited:
**EP-A- 0 927 707**

## Description

The present invention relates to an apparatus for cooling kiln exhaust gases in a kiln bypass, which apparatus comprises a mixing chamber for extracting and cooling a portion of the kiln exhaust gases from a kiln system, said mixing chamber comprising a tubular housing being provided at one end with an exhaust gas inlet for kiln exhaust gases and provided at its other end with an outlet for cooled exhaust gases, said mixing chamber further comprising a tangential inlet for cooling gases, where the apparatus also comprises a first fan for supplying cooling gases to the mixing chamber and a second fan for drawing the kiln exhaust gases through the kiln bypass. The invention also relates to a method for cooling exhaust gases in a kiln bypass.

An apparatus of the aforementioned kind is known for example from EP 927 707 and used for reducing the quantity of volatile components such as chloride, alkali and sulphur which have been introduced to a cement manufacturing plant together with the cement raw materials and the fuel and circulating in the kiln system of the plant and potentially causing clogging and unstable kiln operation. Briefly described, the apparatus operates according to a method where a portion of the kiln exhaust gases via a bypass is extracted and cooled allowing the volatile components in solid form to be separated from the exhaust gases and subsequently disposed of or possibly used in the finished cement or for other purposes.

The apparatus according to EP 927 707 is designed as a double tube construction, consisting of an outer tube and an inner tube forming between them an annular channel, and having a mixing zone immediately in front of the inner tube. The kiln exhaust gases are introduced into the apparatus via the outer tube which is connected to the kiln system, and subsequently mixed and cooled in the mixing zone by means of cooling gases which in the form of a rotating flow following a spiral-shaped flow path are directed to the mixing zone via the annular channel provided between the outer tube and the inner tube. The mixed and cooled exhaust gases are subsequently discharged via the inner tube for further treatment in a subsequent process stage.

During the operation of a kiln bypass of the aforementioned kind the operator will determine the necessary quantity of kiln exhaust gases to be drawn through the kiln bypass in order to maintain a constant level of the volatile components circulating in the kiln system. Typically the quantity of kiln exhaust gases being drawn through the kiln bypass will constitute between 2 and 10 per cent of the total exhaust gas volume, depending on the quantity and composition of the volatile components. During operation regulation of the kiln bypass is traditionally based on the maintenance of a predetermined value for the temperature of the mixed exhaust gases being discharged from the mixing chamber. The regulation per se is carried out on the basis of continuous measurements of the temperature of the mixed exhaust gases and subsequent regulation of the quantities of respectively the cooling gases and kiln exhaust gases as a function of the measured temperature according to a predetermined procedure through an adjustment of one or both fans of the apparatus. The inherent disadvantage of this mode of regulation is that, for example, variations in the temperature of the extracted kiln exhaust gases or varying quantities of dust in the extracted kiln exhaust gases may cause major variations in the quantity of kiln exhaust gases being drawn through the kiln bypass. This is undesirable given that the quantity of combustion air/kiln exhaust gases being drawn through the kiln will also exhibit variations, hence making it difficult for the operator to maintain a specific temperature in the burning zone and a specific air surplus in the kiln. This may affect not only the product quality but may also influence the evaporation of the sulphur and alkali compounds. This involves increased risk of coatings or cloggings occurring in the kiln system due to increased concentration of volatile components or the risk of coatings being formed in the mixing chamber due to insufficient cooling of the kiln exhaust gases. Also, there is a risk of cooling gases entering the kiln system as false air in cases where the swirl number of the cooling gases introduced to the mixing chamber will be so high that the apex of the formed eddy protrudes into the kiln system.

Therefore, it is desirable to have the capability to regulate a kiln bypass so that the quantity of kiln exhaust gases being drawn through the kiln bypass will be substantially constant, while at the same time the cooling in the mixing chamber will be sufficient to prevent coatings from being formed and will take place without entry of cooling gases into the kiln system in the form of false air.

It is the object of the present invention to provide an apparatus as well as a method for cooling kiln exhaust gases in a kiln bypass by means of which the above mentioned desirable objectives can be achieved.

According to the present invention this is achieved by means of an apparatus of the kind mentioned in the introduction, and being characterized in that the apparatus comprises means for measuring the mass flow $m_A$ and the flow velocity $v_A$ of the cooling gases which are introduced to the mixing chamber, and the mass flow $m_B$ and the flow velocity $v_B$ of the cooled exhaust gases being discharged from the mixing chamber, a calculating unit to determine on the basis of the measured values $m_A$, $v_A$, $m_B$ and $v_B$ the actual mass flow $m_C$ and the flow velocity $v_C$ for the kiln exhaust gases being drawn through the kiln bypass and to compare the actual mass flow $m_C$ with a predetermined value for kiln exhaust gases targeted for being drawn through the kiln bypass, a calculating unit to determine on the basis of the values $m_A$, $v_A$, $m_C$ and $v_C$ the actual swirl number S of the gases in the mixing chamber and to compare this with a predetermined, desired value for the swirl number of the gases in the mixing chamber, and means for regulating respectively the fan for feeding cooling gases to the mixing chamber, the fan for drawing the kiln exhaust gases through the kiln bypass and the pressure loss across the apparatus when $\Delta m_C$ or $\Delta S$ deviates from 0.

The method according to the invention for cooling kiln exhaust gases in a kiln bypass comprises the steps that a portion of the exhaust gases from a kiln system are extracted and cooled in a mixing chamber which comprises a tubular housing where kiln exhaust gases are introduced at one end via an exhaust gas inlet, cooled exhaust gases are discharged at the other end via an outlet and cooling gases are introduced to the mixing chamber via a tangential cooling gas inlet, and where cooling gases are supplied to the mixing chamber by means of a first fan and the kiln exhaust gases are drawn through the kiln bypass by means of a second fan, and being characterized in that respectively the mass flow $m_A$ and the flow velocity $v_A$ of the cooling gases being introduced to the mixing chamber, and the mass flow $m_B$ and the flow velocity $v_B$ of the cooled exhaust gases being discharged from the mixing chamber are measured, and in that the actual mass flow $m_C$ and flow velocity $v_C$ for the kiln exhaust gases being drawn through the kiln bypass are determined on the basis of the measured values $m_A$, $v_A$, $m_B$ and $v_B$ and compared with a predetermined value for kiln exhaust gases targeted for being drawn through the kiln bypass, and in that the actual swirl number S of the gases in the mixing chamber are determined on the basis of the values $m_A$, $v_A$, $m_C$ and $v_C$ and compared with a predetermined, desired value for the swirl number of the gases in the mixing chamber, and in that at least one of, respectively, the fan for introducing cooling gases to the mixing chamber, the fan for drawing the kiln exhaust gases through the kiln bypass and the pressure loss across the apparatus are regulated when $\Delta m_C$ or $\Delta S$ deviates from 0.

The swirl number S is defined as the dimensionless quantity expressed by:

$$S = (m_A \, v_A \, R_1) \, / \, (m_C \, v_C \, R_2),$$

where $R_1$ and $R_2$ are characteristic radii in the mixing chamber. Numerous tests have demonstrated that the magnitude of the quantity is descriptive of the propagation of the internal vortex in the mixing chamber. The higher the value of S is, the longer the extension of the vortex will be.

For the apparatus as well as the method according to the present invention for cooling kiln exhaust gases in a kiln bypass it is hereby obtained that, even subject to major variations in operating conditions, the quantity of kiln exhaust gases being drawn through the kiln bypass can be kept essentially constant while simultaneously ensuring sufficient cooling of the kiln exhaust gases in the mixing chamber, thereby preventing coatings from being formed in the mixing chamber per se as well as at its outlet and preventing entry of cooling gases into the kiln system as false air. This is due to the fact that the actual mass flow for the kiln exhaust gases being drawn through the kiln bypass and the actual swirl number S of the gases in the mixing chamber serve as control parameters. Formation of coatings on the walls of the mixing chamber will thus be prevented in that the vortex of cooling gases will act as an insulating layer between the latter and the hot kiln exhaust gases.

The apparatus according to the invention for cooling kiln exhaust gases in a kiln bypass preferably comprises a conical transition piece which is provided between the tubular housing of the mixing chamber and the kiln system.

The apparatus may further advantageously comprise a tubular transition piece which is provided between the conical transition piece and the kiln system in order to generate an increased mixing zone for extracted kiln exhaust gases and cooling gases, and an increased interval for regulating the swirl number S of the gases in the mixing chamber. The tubular transition piece thus makes it possible to increase the swirl number S without involving risk of cooling gases entering the kiln system, thereby improving the mixture and cooling of the extracted kiln exhaust gases.

The outlet of the mixing chamber for cooled exhaust gases may advantageously comprise a tube protruding axially into and having a maximum diameter which is smaller than the tubular housing. This will reduce the risk of the cooling gases just leaving the mixing chamber via the outlet without being mixed with the kiln exhaust gases. The inwardly protruding tube may be eccentrically located relative to the tubular housing, but should preferentially be coaxially located relative to the tubular housing. The inwardly protruding tube may furthermore advantageously be conically formed with its smallest diameter at its inner free end so as to reduce the pressure drop across the outlet.

The means for measuring respectively the mass flow $m_A$ and the flow velocity $v_A$ of the cooling gases being introduced to the mixing chamber and the mass flow $m_B$ and the flow velocity $v_B$ of the cooled exhaust gases being discharged from the mixing chamber may in principle be made up of any known and appropriate means and do not as such constitute a part of the invention.

Nor does the calculating unit per se for determination of $\Delta m_C$ or $\Delta S$ constitute a part of the invention, and it may be made up of any appropriate calculating unit.

The means for regulating the fans for respectively the supply of cooling gases to the mixing chamber and for drawing the kiln exhaust gases through the kiln bypass may be constituted by generally known means, whereas the means for regulating the pressure loss across the apparatus may comprise means for varying the flow area for, respectively, the inlet of the cooling gases and the outlet. The means for varying the flow area of the cooling gas inlet may for example comprise a flap which is configured for rotation about an axis and being capable of regulation during operation by means of appropriate means. The means for varying the flow area of the outlet may for example comprise a throat or a damper which is located in the outlet just outside the mixing chamber. Alternatively a conical tube protruding axially into the tubular housing may be configured in a way which will permit variation of its conicity.

The invention will now be explained in further details with reference to the drawing, being diagrammatical, and where

Fig. 1 shows a sectional view of a kiln system comprising an apparatus for cooling kiln exhaust gases in a kiln bypass according to the invention, and

Figs. 2 and 3 show details of the apparatus shown in Fig. 1.

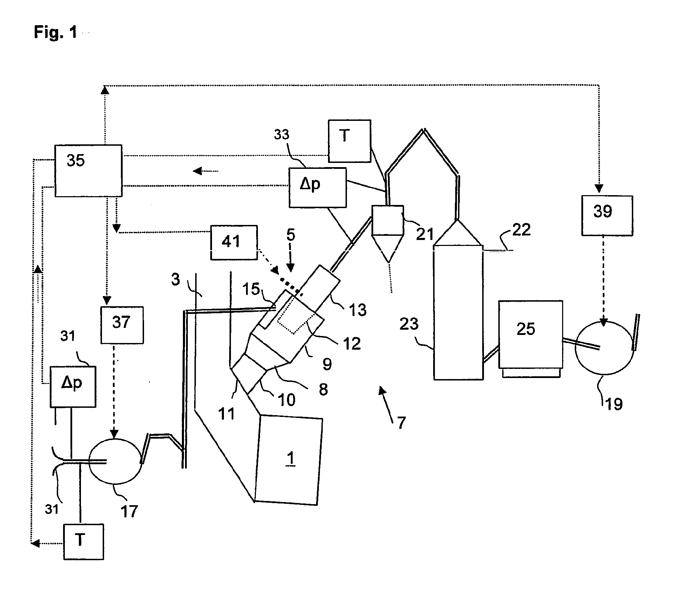

In Fig. 1 is seen a sectional view of a kiln system for manufacturing cement clinker, said kiln system comprising a rotary kiln 1 in which cement raw materials in counter flow to hot kiln exhaust gases are burned into cement clinker, and a riser duct 3 for diverting the kiln exhaust gases from the rotary kiln. The kiln system shown in Fig. 1 incorporates an apparatus 5 for cooling the kiln exhaust gases in a kiln bypass 7. The apparatus 5 comprises a mixing chamber 9, which is formed as a tubular housing with an exhaust gas inlet 11, an outlet 13 for cooled exhaust gasses and a tangential inlet 15 for cooling gases. The apparatus 5 is used to extract and cool down some of the kiln exhaust gases from the kiln system 1, 3. The apparatus 5 further comprises a first fan 17 for feeding cooling gases to the mixing chamber 9 and a second fan 19 for drawing the kiln exhaust gases through the kiln bypass 7. The kiln bypass shown also comprises a cyclone 21 for separating coarse solid particles from the cooled exhaust gas stream which is discharged from the mixing chamber 9, with a possible return of said solid particles to the kiln 1, a further cooling apparatus 23 for the mixed exhaust gases as well as a filter 25 for separating dust having a high content of chloride, alkide and/or sulphur.

According to the present invention the apparatus 5 comprises means 31 for measuring, respectively, the mass flow $m_A$ and the flow velocity $v_A$ of the cooling gases being introduced to the mixing chamber 9, and means 33 for measuring respectively the mass flow $m_B$ and the flow velocity $v_B$ of the cooled exhaust gases being discharged from the mixing chamber 9. The signals from the means 31 and 33 are transmitted to a calculating unit 35 to determine on the basis of the measured values $m_A$, $v_A$, $m_B$ and $v_B$ the actual mass flow $m_C$ and the flow velocity $v_C$ for the kiln exhaust gases being drawn through the kiln bypass and to relate the actual mass flow $m_C$ to a predetermined value for kiln exhaust gases targeted for being drawn through the kiln bypass, and to determine on the basis of the values $m_A$, $v_A$, $m_C$ and $v_C$ the actual swirl number S of the gases in the mixing chamber and to relate it to a predetermined, desired value for the swirl number of the gases in the mixing chamber. The calculating unit 35 then transmits signals to means 37 for regulating the fan 17 for supply of cooling gases to the mixing chamber 9, means 39 for regulation of the fan 19 for drawing the kiln exhaust gases through the kiln bypass 7 and for means 41 for regulating the pressure loss across the apparatus when $\Delta m_C$ or $\Delta S$ deviates from 0.

The means 31, 33 for measuring respectively the mass flow $m_A$ and the flow velocity $v_A$ of the cooling gases being introduced to the mixing chamber 9, and the mass flow $m_B$ and the flow velocity $v_B$ of the cooled exhaust gases being discharged from the mixing chamber 9 may for example be constituted by an aspiration trumpet, an aperture, a Venturi or a Pitot tube in which a pressure differential is measured, which, based on knowledge of the temperature of the gases, the geometric conditions, the barometer readings etc., can be used for calculating these values. For measuring $m_B$ and $v_B$, it will also be possible to use the pressure differential which is measured across the cyclone 21. This solution is particularly advantageous since it does not require installation of additional equipment. The aspiration trumpet and the cyclone with associated temperature meters are illustrated in Fig. 1 as means for measuring $m_A$ and $m_B$, respectively. Other means are sensors performing direct measurements of a velocity, e.g. by transmitting sounds through the flow stream or by perceiving changes in the electrical or magnetic characteristics of a dust-laden flow stream or by measuring the velocity of a turbine wheel. Finally, it will often be possible to derive from the motors of the fans 17, 19 electrical signals indicating the current or power consumption which can be used to estimate the mass flow being transported by the fans. If the operating principle of the cooling apparatus 23 involves injection of water, measurements of the inlet and outlet temperature of the apparatus and of the water consumption can be used to calculate the mass flow $m_B$.

The calculating unit 35 for determination of $\Delta m_C$ or $\Delta S$ and for transmitting signals to respectively the means 37, 39 and 41 may be constituted by a computer equipped with the appropriate software.

The means 37 and 39 for regulation of the fans 17, 19 for respectively the supply of cooling gases to the mixing chamber 9 and for drawing the kiln exhaust gases through the kiln bypass 7 may be constituted by frequency converters for the motors of fan or dampers at the aspiration point for or on the exhaust end of the latter.

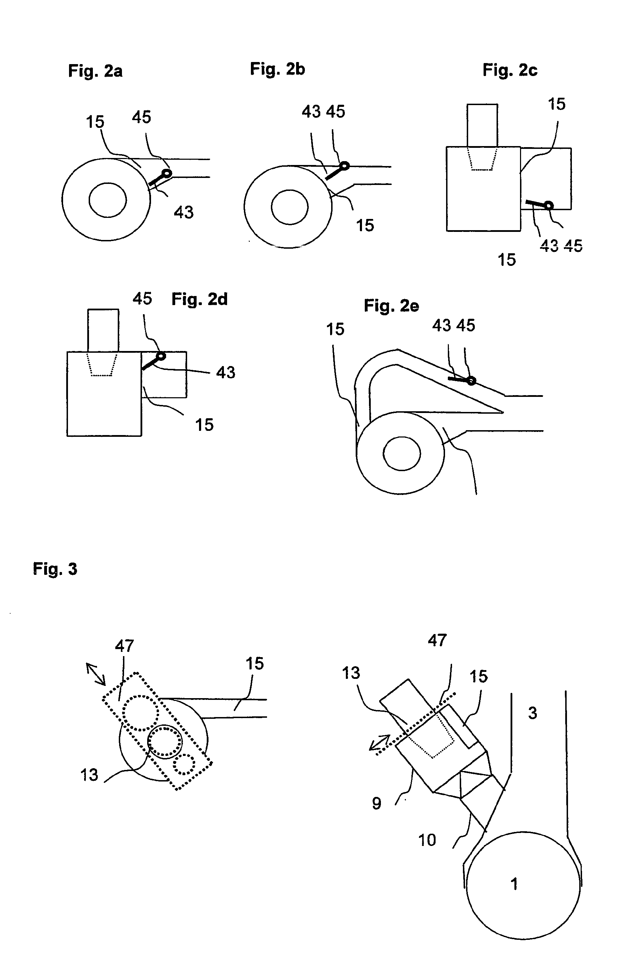

The means 41 for regulating the pressure loss across the apparatus 5 may comprise means for varying respectively the flow area of the cooling gas inlet 15 and that of the outlet 13. The means 41 for varying the flow area of the cooling gas inlet may, for example, as shown in Fig. 2a-2e, comprise a flap 43 which is configured for rotation about an axis 45, and being capable of regulation during operation, for example with the help of a motor which receives signals from the calculating unit 35. As indicated in Fig. 2e, the tangential cooling gas inlet may be divided into several channels and regulation can be achieved through the use of a flap in one of these channels. The means 41 for varying the flow area of the outlet may for example comprise a throat or a damper 47 which is located in the outlet immediately outside the mixing chamber 9. A particular embodiment of a damper is indicated in Fig. 3 in the form of a displaceable perforated plate having a number of holes of different sizes making it possible to apply a number of default values for the flow area. An alternative option would be to use a conical tube protruding axially into the tubular housing, said tube being configured in a way which permits variation of its conicity.

The apparatus 5, shown in Fig. 1, comprises both a conical transition piece 8 and a tubular transition piece 10 which are located in extension of one another between the tubular housing of the mixing chamber 9, and the kiln system 1, 3. Hereby is provided an extended mixing zone for extracted kiln exhaust gases and cooling gases and a greater interval for regulating the swirl number S of the gases in the mixing chamber 9. The tubular transition piece 10 thus makes it possible to increase the swirl number S without involving risk of cooling gases entering the kiln system, thereby improving the mixture and cooling of the extracted kiln exhaust gases.

In the embodiment shown in Fig. 1 the outlet 13 of the mixing chamber 9 for cooled exhaust gases comprises a centrally fitted tube 12 which protrudes axially into and having a smaller maximum diameter than the tubular housing. This will reduce the risk of the cooling gases just leaving the mixing chamber via the outlet without being mixed with the kiln exhaust gases. The tube 12 is conically formed with the smallest diameter at its inner free end so as to reduce the pressure drop across the outlet 13.

During the operation of the apparatus regulation can be carried out automatically and continuously using software which controls the regulating means 37, 39 and 41 according to a predetermined schedule. Alternatively the regulation can be carried out semi-automatically based on operator control of the regulating means 37, 39 and 41 based on the specific operating data for respectively $\Delta m_C$ and $\Delta S$.

**Claims**

1. An apparatus (5) for cooling kiln exhaust gases in a kiln bypass (7), which apparatus comprises a mixing chamber (9) for extracting and cooling a portion of the kiln exhaust gases from a kiln system (1, 3), said mixing chamber (9) comprising a tubular housing being provided at one end with an exhaust gas inlet (11) for kiln exhaust gases and provided at its other end with an outlet (13) for cooled exhaust gases, said mixing chamber (9) further comprising a tangential inlet (15) for cooling gases, where the apparatus also comprises a first fan (17) for supplying cooling gases to the mixing chamber (9) and a second fan (19) for drawing the kiln exhaust gases through the kiln bypass (7), **characterized in that** the apparatus (5) comprises means (31, 33) for measuring, respectively, the mass flow $m_A$ and the flow velocity $v_A$ of the cooling gases which are introduced to the mixing chamber (9), and the mass flow $m_B$ and the flow velocity $v_B$ of the cooled exhaust gases being discharged from the mixing chamber (9), a calculating unit (35) to determine on the basis of the measured values $m_A$, $v_A$, $m_B$ and $v_B$ the actual mass flow $m_C$ and the flow velocity $v_C$ for the kiln exhaust gases being drawn through the kiln bypass (7) and to compare the actual mass flow $m_C$ with a predetermined value for kiln exhaust gases targeted for being drawn through the kiln bypass (7), a calculating unit (35) to determine on the basis of the values $m_A$, $v_A$, $m_C$ and $v_C$ the actual swirl number S of the gases in the mixing chamber (9) and to compare this with a predetermined, desired value for the swirl number of the gases in the mixing chamber (9), and means (37, 39, 41) for regulating respectively the fan (17) for feeding cooling gases to the mixing chamber (9), the fan (19) for drawing the kiln exhaust gases through the kiln bypass (7) and the pressure loss across the apparatus (5) when $\Delta m_C$ or $\Delta S$ deviates from 0.

2. An apparatus (5) according to claim 1, **characterized in that** the means (41) for regulating the pressure loss across the apparatus (5) comprise means (43, 47) for varying the flow area for, respectively, the inlet (15) of the cooling gases and the outlet (13).

3. An apparatus (5) according to claim 2, **characterized in** the means (41) for varying the flow area of the cooling gas inlet (15) comprise a flap (43) which is configured for rotation about an axis (45) and being capable of regulation during operation.

4. An apparatus (5) according to claim 2, **characterized in** the means (41) for varying the flow area of the outlet comprise a throat or a damper (47) which is located in the outlet (13).

5. An apparatus (5) according to claim 1, **characterized in** comprising a conical transition piece (8) which is provided between the tubular housing of the mixing chamber (9) and the kiln system (1, 3).

6. An apparatus (5) according to claim 5, **characterized in** comprising a tubular transition piece (10) which is provided between the conical transition piece (8) and the kiln system (1, 3).

7. An apparatus (5) according to claim 1, **characterized in** the outlet (13) of the mixing chamber (9) for cooled exhaust gases comprises a tube (12) protruding axially into and having a maximum diameter which is smaller than the tubular housing.

8. An apparatus (5) according to claim 7, **characterized in** the tube (12) is coaxially located relative to the tubular housing.

9. An apparatus (5) according to claim 7 or 8, **characterized in** the tube (12) is be conically formed with its smallest diameter at its inner free end.

10. A method for cooling kiln exhaust gases in a kiln bypass (7) comprising the steps that a portion of the exhaust gases from a kiln system (1 ,3) are extracted and cooled in a mixing chamber (9) which comprises a tubular housing where kiln exhaust gases are introduced at one end via an exhaust gas inlet (11), cooled exhaust gases are discharged at the other end via an outlet (13) and cooling gases are introduced to the mixing chamber via a tangential cooling gas inlet (15), and where cooling gases are supplied to the mixing chamber by means of a first fan (17) and the kiln exhaust gases are drawn through the kiln bypass by means of a second fan (19), **characterized in that** respectively the mass flow $m_A$ and the flow velocity $v_A$ of the cooling gases being introduced to the mixing chamber (9), and the mass flow $m_B$ and the flow velocity $v_B$ of the cooled exhaust gases being discharged from the mixing chamber (9) are measured, and **in that** the actual mass flow $m_C$ and flow velocity $v_C$ for the kiln exhaust gases being drawn through the kiln bypass (7) are determined on the basis of the measured values $m_A$, $v_A$, $m_B$ and $v_B$ and compared with a predetermined value for kiln exhaust gases targeted for being drawn through the kiln bypass, and **in that** the actual swirl number S of the gases in the mixing chamber (9) are determined on the basis of the values $m_A$, $v_A$, $m_C$ and $v_C$ and compared with a predetermined, desired value for the swirl number of the gases in the mixing chamber, and **in that** at least one of, respectively, the fan (17) for introducing cooling gases to the mixing chamber, the fan (19) for drawing the kiln exhaust gases through the kiln bypass and the pressure loss across the apparatus are regulated when $\Delta m_C$ or $\Delta S$ deviates from 0.

**Patentansprüche**

1. Vorrichtung (5) zum Kühlen von Brennofenabgasen in einer Brennofen-Nebenleitung (7), wobei die Vorrichtung eine Mischkammer (9) zum Extrahieren und Kühlen eines Anteils der Brennofenabgase von einem Brennofensystem (1, 3) umfasst, wobei die Mischkammer (9) ein röhrenförmiges Gehäuse umfasst, das an einem Ende mit einem Abgas-Einlass (11) für Brennofenabgase versehen ist und an seinem anderen Ende mit einem Auslaß (13) für gekühlte Abgase versehen ist, wobei die Mischkammer (9) weiter einen seitlichen Einlass (15) für Kühlgase umfasst, wobei die Vorrichtung auch einen ersten Lüfter (17) zum Zuführen von Kühlgasen zu der Mischkammer (9) und einen zweiten Lüfter (19) zum Ziehen der Brennofenabgase durch die Brennofen-Nebenleitung (7) aufweist, **dadurch gekennzeichnet, dass** die Vorrichtung (5) Mittel (31, 33) umfasst zum jeweiligen Messen des Massenflusses $m_A$ und der Flussgeschwindigkeit $v_A$ der Kühlgase, die in die Mischkammer (9) eingeleitet werden, und des Massenflusses $m_B$ und der Flussgeschwindigkeit $v_B$ der gekühlten Abgase, die aus der Mischkammer (9) ausgelassen werden, eine Berechnungseinheit (35) zum Bestimmen der tatsächlichen Massenflüsse $m_C$ und der Flußgeschwindigkeit $v_C$ für die Brennofenabgase, die durch die Brennofen-Nebenleitung (7) gezogen werden, auf Grundlage der gemessenen Werte $m_A$, $v_A$, $m_B$ und $v_B$, und zum Vergleichen des tatsächlichen Massenflusses $m_C$ mit einem vorbestimmten angestrebten Wert für Brennofenabgase, die durch die Brennofen-Nebenleitung (7) gezogen werden sollen, eine Berechnungseinheit (35) zum Bestimmen der tatsächlichen Verwirbelungszahl S der Gase in der Mischkammer (9) auf Basis der Werte $m_A$, $v_A$, $m_C$ und $v_C$ und zum Vergleichen dieser mit einem vorbestimmten, gewünschten Wert für die Verwirbelungszahl der Gase in der Mischkammer (9), und Mittel (37, 39, 41) zum jeweiligen Regeln des Lüfters (17) zum Zuführen von Kühlgasen in die Mischkammer (9), des Lüfters (19) zum Ziehen der Brennofenabgase durch die Brennofen-Nebenleitung (7) oder des Druckverlusts durch die Vorrichtung (5), wenn $\Delta m_C$ oder $\Delta S$ von Null abweicht.

2. Vorrichtung (5) nach Anspruch 1, **dadurch gekennzeichnet, dass** das Mittel (41) zum Regeln des Druckverlusts durch die Vorrichtung (5) Mittel (43, 47) zum Verändern des Flußquerschnitts für den Einlass (15) der Kühlgase bzw. den Auslass (13) umfassen.

3. Vorrichtung (5) nach Anspruch 2, **dadurch gekennzeichnet, dass** das Mittel (41) zum Verändern des Flußquerschnitts des Kühlgas-Einlasses (15) eine Klappe (43) umfasst, die zu einer Drehung um eine Achse (45) eingerichtet ist, und zur Regelung während des Betriebs in der Lage ist.

4. Vorrichtung (5) nach Anspruch 2, **dadurch gekennzeichnet, dass** das Mittel (41) zum Verändern des Flußquerschnitts des Auslasses eine Verengung oder eine Absperrvorrichtung (47) umfasst, die sich in dem Auslass (13) befindet.

5. Vorrichtung (5) nach Anspruch 1, **dadurch gekenn-**

**zeichnet, dass** sie ein konisches Übergangsstück (8) umfasst, das zwischen dem röhrförmigen Gehäuse der Mischkammer (9) und dem Brennofensystem (1, 3) vorgesehen ist.

6. Vorrichtung (5) nach Anspruch 5, **dadurch gekennzeichnet, dass** sie ein rohrförmiges Übergangsstück (10) umfasst, das zwischen dem konischen Übergangsstück (8) und dem Brennofensystem (1, 3) vorgesehen ist.

7. Vorrichtung (5) nach Anspruch 1, **dadurch gekennzeichnet, dass** der Auslaß (13) der Mischkammer (9) für gekühlte Abgase ein Rohr (12) umfasst, das sich axial in das rohrförmige Gehäuse hinein erstreckt und einen maximalen Durchmesser aufweist, der geringer ist als das rohrförmige Gehäuse.

8. Vorrichtung (5) nach Anspruch 7, **dadurch gekennzeichnet, dass** das Rohr (12) relativ zu dem rohrförmigen Gehäuse koaxial angeordnet ist.

9. Vorrichtung (5) nach Anspruch 7 oder 8, **dadurch gekennzeichnet, dass** das Rohr (12) konisch geformt ist, wobei sein kleinster Durchmesser sich an seinem inneren freien Ende befindet.

10. Verfahren zum Kühlen von Brennofenabgasen in einer Brennofen-Nebenleitung (7), umfassend die Schritte,

dass ein Teil der Abgase von einem Brennofensystem (1, 3) in einer Mischkammer (9) extrahiert und gekühlt wird, welche ein rohrförmiges Gehäuse umfasst, in das Brennofenabgase an einem Ende über einen Abgas-Einlass (11) eingeleitet werden, gekühlte Abgase an dem anderen Ende über einen Auslaß (13) ausgelassen werden und Kühlgase in die Mischkammer über einen seitlichen Kühlgaseinlaß (15) eingeleitet werden, und wobei Kühlgase der Mischkammer mittels eines ersten Lüfters (17) zugeführt werden und die Brennofenabgase durch die Brennofennebenleitung mittels eines zweiten Lüfters (19) gezogen werden,

**dadurch gekennzeichnet, dass**

jeweils der Massenfluss $m_A$ und die Flussgeschwindigkeit $v_A$ der Kühlgase, die in die Mischkammer (9) eingeleitet werden, und der Massenfluss $m_B$ und die Flussgeschwindigkeit $v_B$ der gekühlten Abgase, die aus der Mischkammer (9) ausgelassen werden, gemessen werden,

und dass der tatsächliche Massenfluss $m_C$ und Flussgeschwindigkeit $v_C$ für die Brennofenabgase, die durch die Brennofen-Nebenleitung (7) gezogen werden, auf Basis der gemessenen Werte $m_A$, $v_A$, $m_B$, und $v_B$ bestimmt werden und mit einem vorbestimmten angestrebten Wert für Brennofenabgase verglichen werden, die durch die Brennofen-Nebenleitung gezogen werden sollen,

und dass die tatsächliche Verwirbelungszahl S der Gase in der Mischkammer (9) auf Basis der Werte $m_A$, $v_A$, $m_C$ und $v_C$ bestimmt wird und mit einem vorbestimmten, gewünschten Wert für die Verwirbelungszahl der Gase in der Mischkammer verglichen wird, und dass mindestens eines aus dem Lüfter (17) zum Einleiten von Kühlgasen in die Mischkammer, dem Lüfter (19) zum Ziehen der Brennofenabgase durch die Brennofen-Nebenleitung, oder der Druckverlust durch die Vorrichtung hindurch geregelt werden, wenn $\Delta m_C$ oder $\Delta S$ von 0 abweicht.

**Revendications**

1. Un appareil (5) pour le refroidissement de gaz d'échappement de four dans une dérivation (7) du four, lequel appareil comprend une chambre de mélange (9) pour l'extraction et le refroidissement d'une partie des gaz d'échappement provenant d'un système de fours (1, 3), ladite chambre de mélange (9) comprenant un boîtier tubulaire pourvu à une extrémité d'une entrée (11) de gaz d'échappement pour les gaz d'échappement du four et comprenant à son autre extrémité une sortie (13) pour les gaz d'échappement refroidis, ladite chambre de mélange (9) comprenant en outre une entrée tangentielle (15) pour des gaz de refroidissement, l'appareil comprenant également un premier ventilateur (17) pour la fourniture de gaz de refroidissement à la chambre de mélange (9) et un second ventilateur (19) pour extraire des gaz d'échappement du four à travers la dérivation (7) du four, **caractérisé en ce que** l'appareil (5) comporte des moyens (31, 33) pour la mesure, respectivement, du débit massique $m_A$ et de la vitesse d'écoulement $v_A$ des gaz de refroidissement qui sont introduits dans la chambre de mélange (9), et du débit massique de $m_B$ et de la vitesse d'écoulement $v_B$ des gaz d'échappement refroidis qui sont évacués de la chambre de mélange (9), une unité de calcul (35) pour déterminer, sur la base des valeurs mesurées $m_A$, $v_A$, $m_B$ et $v_B$, le débit massique effectif $m_C$ et la vitesse d'écoulement $v_C$ effective des gaz d'échappement du four qui sont évacués à travers la dérivation (7) du four et pour comparer le débit massique effectif $m_C$ avec une valeur prédéterminée à atteindre pour les gaz d'échappement du four devant être évacués à travers la dérivation (7) du four, une unité de calcul (35) pour déterminer sur la base des valeurs $m_A$, $v_A$, $m_C$ et $v_C$ le coefficient de turbulence S effectif des gaz dans la chambre de mélange (9) et de le comparer avec une valeur prédéterminée, souhaitée, pour le coefficient de turbulence des gaz présents dans la chambre de mélange (9), et des moyens (37, 39, 41) pour réguler, respectivement, le ventilateur (17) d'alimentation de gaz de refroidissement de la chambre de mélange (9), le ventilateur (19) pour l'évacuation des gaz d'échappement du four à travers la dérivation (7) du four, et la perte de pression dans l'appareil (5) lorsque $\Delta m_C$ ou $\Delta S$ s'écarte de 0.

2. Un appareil (5) selon la revendication 1, **caractérisé en ce que** les moyens (41) de régulation de la perte de pression dans l'appareil (5) comprennent des moyens (43, 47) pour faire varier la section de passage pour, respectivement, l'entrée (15) des gaz de refroidissement et la sortie (13).

3. Un appareil (5) selon la revendication 2, **caractérisé en ce que** les moyens (41) pour faire varier la section de passage de l'entrée de gaz de refroidissement (15) comportent un volet (43) qui est configuré pour une rotation autour d'un axe (45) et qui est apte à réaliser une régulation en cours de fonctionnement.

4. Un appareil (5) selon la revendication 2, **caractérisé en ce que** les moyens (41) pour faire varier la section de passage de la sortie comprennent une gorge ou un amortisseur (47) qui est situé dans la sortie (13).

5. Un appareil (5) selon la revendication 1, **caractérisé en ce qu'**il comprend une pièce de transition conique (8) qui est placée entre le corps tubulaire de la chambre de mélange (9) et le système du four (1, 3).

6. Un appareil (5) selon la revendication 5, **caractérisé en ce qu'**il comprend une pièce de transition (10) tubulaire qui est placée entre la pièce de transition conique (8) et le système du four (1, 3).

7. Un appareil (5) selon la revendication 1, **caractérisé en ce que** la sortie (13) de la chambre de mélange (9) pour les gaz d'échappement refroidis comprend un tube (12) faisant saillie axialement dans le boîtier tubulaire et ayant un diamètre maximal qui est plus petit que celui de ce boîtier.

8. Un appareil (5) selon la revendication 7, **caractérisé en ce que** le tube (12) est situé coaxialement par rapport au boîtier tubulaire.

9. Un appareil (5) selon la revendication 7 ou 8, **caractérisé en ce que** le tube (12) est de forme conique avec son plus petit diamètre à son extrémité libre intérieure.

10. Un procédé de refroidissement de gaz d'échappement de four dans une dérivation (7) du four, comprenant les étapes consistant en ce qu'une partie des gaz d'échappement provenant d'un système de four (1, 3) soit extraite et refroidie dans une chambre de mélange (9) qui comprend un boîtier tubulaire dans lequel les gaz d'échappement du four sont introduits à une extrémité par une entrée (11) de gaz d'échappement, en ce que des gaz d'échappement refroidis soient rejetés à l'autre extrémité par une sortie (13) et en ce que des gaz de refroidissement soient introduits dans la chambre de mélange via une entrée tangentielle (15) de gaz de refroidissement, les gaz de refroidissement étant fournis à la chambre de mélange au moyen d'un premier ventilateur (17) et les gaz d'échappement du four étant extraits à travers la dérivation du four au moyen d'un second ventilateur (19), **caractérisé en ce que**, respectivement, le débit massique $m_A$ et la vitesse d'écoulement $v_A$ des gaz de refroidissement introduits dans la chambre de mélange (9), et le débit massique $m_B$ et la vitesse d'écoulement $v_B$ des gaz d'échappement refroidis évacués de la chambre de mélange (9) sont mesurées, et **en ce que** le débit massique effectif $m_C$ et la vitesse d'écoulement $v_C$ effective pour les gaz d'échappement du four évacués par la dérivation (7) du four sont déterminés sur la base des valeurs mesurées $m_A$, $v_A$, $m_B$ et $v_B$ et comparés à une valeur prédéterminée à atteindre de gaz d'échappement du four devant être évacués à travers la dérivation du four, et **en ce que** le coefficient de turbulence S effectif des gaz dans la chambre de mélange (9) sont déterminés sur la base des valeurs $m_A$, $v_A$, $m_C$ et $v_C$ et comparés à une valeur prédéterminée, souhaitée, pour le coefficient de turbulence des gaz présents dans la chambre de mélange, et **en ce qu'**au moins un, respectivement, parmi le ventilateur (17) permettant d'introduire des gaz de refroidissement de la chambre de mélange le ventilateur (19) permettant l'évacuation des gaz d'échappement du four à travers la dérivation du four et la perte de pression dans l'appareil, est régulé lorsque $\Delta m_C$ ou $\Delta S$ s'écarte de 0.

**Fig. 1**

**Fig. 2a**

15   45

43

**Fig. 2b**

43 45

15

**Fig. 2c**

15

43 45

15

**Fig. 2d**

45

43

15

**Fig. 2e**

15   43 45

**Fig. 3**

47   15

13

47   15

13   3

9

10   1

**EP 2 240 734 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 927707 A